# FASCICULE DE BREVET EUROPEEN

(11) **EP 2 268 470 B1**
(45) Date de publication et mention de la délivrance du brevet: **23.01.2013**
(21) Numéro de dépôt: 09742269.5
(22) Date de dépôt: 08.04.2009
(51) Int. Cl.: B29C 33/04, B29D 30/06, B29C 35/16

(54) **MOULE DE VULCANISATION D'UN PNEUMATIQUE, INSTALLATION ET PROCEDE DE REGULATION THERMIQUE DU MOULE**
FORM ZUR VULKANISIERUNG EINES REIFENS, ANLAGE UND VERFAHREN ZUR REGULIERUNG DER TEMPERATUR DER FORM
MOULD FOR VULCANIZING A TYRE, INSTALLATION AND METHOD FOR REGULATING THE TEMPERATURE OF THE MOULD

(30) Priorité: 11.04.2008 FR 0852446
(43) Date de publication de la demande: 05.01.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: GOUMAULT, Pascal, F-63200 Riom (FR)
(74) Mandataire: Reynaud, Georges
(86) Numéro de dépôt international: PCT/FR2009/050613
(87) Numéro de publication internationale: WO 2009/136071

(56) Documents cités:
- EP-A- 0 578 105
- EP-A- 1 743 755
- US-A- 1 469 747
- US-A- 1 544 002
- US-A- 5 173 308

## Description

La présente invention concerne le domaine technique des pneumatiques pour véhicule automobile et plus particulièrement de la fabrication de ces pneumatiques.

De façon classique, un pneumatique a une forme généralement torique et comprend deux parties latérales formant des flancs reliées par une partie sommet formant une bande de roulement.

En général, l'épaisseur du pneumatique varie selon la partie considérée. Par exemple, dans le cas d'un pneumatique destiné à équiper un véhicule de type génie civil, la partie sommet formant la bande de roulement peut avoir une épaisseur de 30 cm alors que les parties latérales formant les flancs ont chacune une épaisseur d'environ 2 à 3 cm.

Il est connu de fabriquer un pneumatique en chauffant une ébauche crue du pneumatique dans un moule de forme générale annulaire autour d'un axe de révolution. Le chauffage de l'ébauche provoque sa vulcanisation. Comme la bande de roulement est plus épaisse que chacun des flancs, il convient de répartir convenablement la chaleur dans le moule afin de transmettre davantage de calories dans la bande de roulement que dans un flanc. Il est connu de maîtriser cette répartition de chaleur en évacuant les calories en excès dans les parties du moule en contact avec les flancs. Les calories en excès sont évacuées au moyen d'un liquide caloporteur de refroidissement circulant dans les parties du moule en contact avec les flancs, plus particulièrement dans un canal annulaire du moule s'étendant autour de l'axe du moule. Le canal comprend une entrée d'admission du liquide et une sortie de refoulement du liquide située angulairement à proximité de l'entrée d'admission de manière à ce que le liquide parcourt un tour sensiblement complet dans le canal.

Du fait des échanges de chaleur avec le moule, la température du liquide caloporteur augmente au cours de son trajet circulaire dans le canal, de sorte que le refroidissement du moule par le liquide caloporteur est moins efficace en fin de parcours du liquide dans le canal qu'en début de parcours. Il existe donc un écart relativement important de température du liquide caloporteur entre l'entrée et la sortie de liquide dans le canal.

Il est possible de réduire les écarts de température entre l'entrée du liquide dans le canal et la sortie du liquide de ce canal, en augmentant le débit d'admission du liquide. Ceci limite la durée des échanges thermiques entre le moule et le liquide au cours du trajet de ce dernier et ainsi réduit l'écart de température du liquide entre l'entrée et la sortie.

Toutefois, cette solution ne donne pas entière satisfaction.

Le brevet EP 578105 - B décrit un appareil de vulcanisation de pneus de véhicule routier comprenant: un moule définissant intérieurement une chambre de vulcanisation toroidale pour un pneu non encore traité; un certain nombre de moyens d'échange de chaleur voisins du moule; une unité de vulcanisation en phase gazeuse comprenant a son tour une première et une seconde partie de chaque côté du moule; et des moyens pour déplacer lesdites deux parties l'une vers l'autre et ainsi serrer le moule; ledit appareil comprenant également un module de façonnage interne ayant une vessie annulaire dilatable à l'intérieur de ladite chambre toroidale, et des entrées et des sorties pour la circulation sous pression de gaz d'échange de chaleur a l'intérieur de la vessie; l'une desdites deux parties de l'unité de vulcanisation présentant un noyau central s'étendant à travers le moule et le module interne et étant relié d'une manière coulissante au module interne; et un joint apte à être libéré étant fourni pour relier axialement le noyau à l'autre partie de l'unité de vulcanisation.

L'invention a notamment pour but d'optimiser l'homogénéité du refroidissement des parties du moule en contact avec les flancs du pneumatique, ceci avec des moyens simples et efficaces.

A cet effet, l'invention a pour objet un moule pour la vulcanisation d'une ébauche crue de pneumatique comme défini dans la revendication 1, ce moule ayant une forme générale annulaire autour d'un axe de révolution et comprenant des moyens de canalisation d'un liquide caloporteur suivant un trajet sensiblement circulaire autour de l'axe, caractérisé en ce que les moyens de canalisation comprennent une paroi annulaire autour de l'axe, séparant aux moins deux chambres de circulation de liquide caloporteur et en ce qu'une extrémité aval (respectivement amont) d'une des chambres a sensiblement la même position angulaire par rapport au trajet sensiblement circulaire que l'extrémité aval (respectivement amont) de l'autre des chambres, le moule comprend de plus des moyens de mise en circulation du liquide dans des sens opposés dans les deux chambres.

Grâce à la disposition relative des extrémités des deux chambres et à la circulation du liquide dans des sens opposés dans ces deux chambres, la température moyenne de la zone en contact thermique avec les moyens de canalisation comprenant les deux chambres est relativement homogène. En effet, le liquide caloporteur en début de trajet dans une première chambre, relativement froid, prélève plus de calories à la zone du moule en contact avec cette première chambre que le liquide caloporteur en fin de trajet dans la seconde chambre, relativement plus chaud, si bien que la température moyenne de la zone en contact avec les deux chambres est relativement homogène. On entend par « paroi », une cloison ayant une relativement faible épaisseur de manière à ce que les deux chambres soient suffisamment proches pour influencer conjointement thermiquement la zone en contact avec le moule. Ainsi, en tout point de la circonférence des chambres, considérées comme un échangeur thermique unique, la température est sensiblement constante et correspond approximativement à la valeur moyenne des températures des liquides circulant dans les deux chambres. Il en résulte que la différence de température entre la surface du moule et les deux chambres considérées comme un échangeur unique est sensiblement constante ce qui permet de résoudre le problème posé.

L'invention a également pour objet un moule pour la vulcanisation d'une ébauche crue de pneumatique comme défini dans la revendication 2, ce moule ayant une forme générale annulaire autour d'un axe de révolution et comprenant des moyens de canalisation d'un liquide caloporteur suivant un trajet sensiblement circulaire autour de l'axe, **caractérisé en ce que** les moyens de canalisation comprennent une paroi annulaire autour de l'axe, séparant aux moins deux chambres de circulation de liquide caloporteur et **en ce qu**'une extrémité aval (respectivement amont) d'une des chambres est disposée sensiblement diamétralement opposée à l'extrémité aval (respectivement amont) de l'autre des chambres, le moule comprend de plus des moyens de mise en circulation du liquide dans des sens identiques dans les deux chambres. Des formes préférentielles de d'invention sont définies dans les revendications dépendantes.

Un moule selon l'invention peut comprendre en outre l'une ou plusieurs des caractéristiques suivantes :
- la paroi couple thermiquement les deux chambres ;
- la paroi est réalisée dans un matériau thermiquement conducteur ;
- la paroi comprend des moyens de passage du liquide d'une chambre à l'autre ;
- les moyens de passage comprennent un bord de débordement du liquide alternativement dans une chambre puis dans l'autre ;
- la paroi s'étend sensiblement parallèlement à l'axe ;
- au moins une chambre comprend une paroi de séparation d'une extrémité amont et d'une extrémité aval de la chambre ;
- la paroi de séparation comprend des moyens de passage du liquide entre les deux extrémités ;
- les moyens de passage comprennent des orifices de passage du liquide caloporteur d'une chambre à l'autre ;
- la paroi de séparation des deux extrémités est réalisée dans un matériau poreux perméable au liquide circulant dans la chambre ;
- l'aire des sections de chaque chambre évolue angulairement autour de l'axe de façon opposée l'une de l'autre, par exemple de façon à diminuer dans le sens allant d'une extrémité amont à une extrémité aval de la chambre ;
- l'extrémité amont étant munie d'au moins un orifice d'entrée, l'orifice est délimité par des moyens d'orientation du flux de liquide destinés à diriger une partie du flux suivant une boucle s'étendant entre l'orifice d'entrée et la paroi de séparation des extrémités amont et aval de la chambre ;
- les moyens d'orientation sont destinés à diriger une partie du flux suivant une direction sensiblement orthogonale à l'axe du moule.

L'invention a encore pour objet une installation de régulation thermique d'un moule selon l'invention comme définie dans la revendication 14, **caractérisée en ce qu'**elle comprend des moyens d'inversion du sens de circulation du liquide dans les chambres du moule à une fréquence prédéterminée.

L'invention a enfin pour objet un procédé de régulation thermique d'un moule selon l'invention comme définie dans la revendication 15, **caractérisé en ce que** l'on inverse le sens de circulation du liquide dans chaque chambre à une fréquence prédéterminée

L'invention sera mieux comprise à la lecture de la description qui va suivre, donnée uniquement à titre d'exemple et faite en se référant aux dessins dans lesquels :
- la figure 1 une vue schématique d'une installation de régulation thermique d'un moule selon un premier mode de réalisation de l'invention ;
- la figure 2 est une vue schématique de moyens de canalisation du moule de la figure 1 comprenant deux chambres de circulation du liquide ;
- la figure 3 est une vue en perspective des sections des chambres selon la ligne 3-3 de la figure 2, les chambres étant séparées par une paroi annulaire ;
- la figure 4 est un graphique représentant deux courbes d'évolution de la pression du liquide respectivement dans les deux chambres de la figure 2 en fonction d'un angle de rotation autour de l'axe du moule ;
- la figure 5 est un graphique représentant une courbe d'évolution de la hauteur de la paroi annulaire de la figure 3 en fonction d'un angle de rotation autour de l'axe ;
- la figure 6 est une vue schématique partielle d'une chambre de la figure 2 comprenant une paroi de séparation de ses extrémités amont et aval selon une première variante ;
- la figure 7 est une vue schématique partielle de la chambre de la figure 2 comprenant une paroi de séparation de ses extrémités amont et aval selon une deuxième variante ;
- la figure 8 est une vue schématique d'une installation de régulation thermique d'un moule selon un troisième mode de réalisation de l'invention ;
- la figure 9 est une vue schématique agrandie de la partie cerclée de la figure 8;
- la figure 10 est une vue de moyens de canalisation du moule de la figure 8 comprenant quatre chambres de circulation du liquide,
- la figure 11 est une vue schématique de moyens de canalisation d'un moule selon un second mode de réalisation de l'invention,
- la figure 12 est une vue schématique de moyens de canalisation d'un moule selon un quatrième mode de réalisation de l'invention.

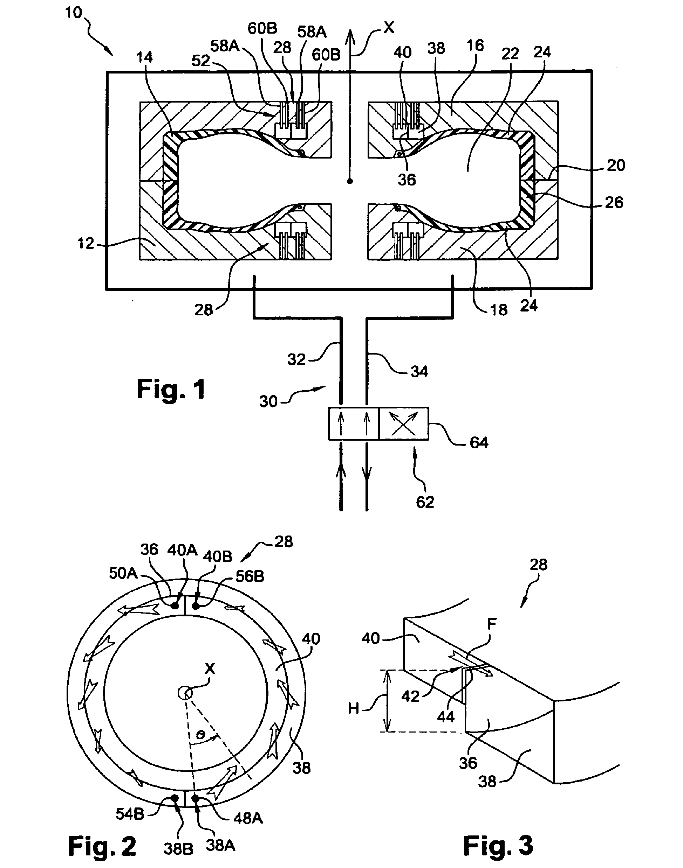

On a représenté sur la figure 1 une installation selon l'invention désignée par la référence générale 10.

L'installation 10 est une installation de régulation thermique d'un moule 12 selon l'invention. Le moule 12 est particulièrement bien adapté pour la vulcanisation d'une ébauche crue 14 de pneumatique pour véhicule automobile. En particulier, le moule 12 a une forme annulaire autour d'un axe de révolution X.

Le moule 12 comprend deux demi-moules complémentaires, dits respectivement « inférieur » 18 et « supérieur » 16. Chaque demi-moule 16 et 18 est muni d'un plan de joint 20 et d'une paroi interne destinée à être en contact avec l'ébauche du pneumatique 14 au cours de la vulcanisation. Des empreintes (non représentées) sont gravées sur cette paroi interne.

Le moule 12 comprend également dans sa partie centrale 22 une membrane (non représentée) destinée à être remplie de vapeur sous pression ou d'eau au cours de la vulcanisation du pneumatique 14, de manière à repousser l'ébauche crue 14 contre les empreintes gravées dans la paroi interne du moule 12 et donner ainsi la forme finale du pneumatique 14, telle que représentée sur la figure 1.

Ainsi, comme cela est représenté sur la figure 1, le pneumatique 14 a une forme finale torique et comprend deux parties latérales 24 formant des flancs reliés par une partie sommet 26 formant une bande de roulement. On voit notamment sur cette figure que chaque flanc 24 a une épaisseur inférieure à l'épaisseur de la bande de roulement 26.

Afin de tenir compte de ces différences d'épaisseur au cours de la vulcanisation et ainsi de répartir convenablement la chaleur dans le moule 12 en transmettant davantage de calories dans la bande de roulement 26 que dans les flancs 24, le moule 12 comprend également des moyens 28 de canalisation de liquide caloporteur de refroidissement suivant un trajet sensiblement circulaire autour de l'axe X (figure 2) s'étendant dans une zone du moule 12 en contact avec les flancs 24. Dans cet exemple, chaque demi-moule 16 et 18 comprend des moyens de canalisation 28.

Le liquide circulant dans les moyens 28 est destiné à prélever des calories à la zone du moule 12 en contact avec les flancs 24 permettant ainsi de maintenir la température du moule 12 en contact avec les flancs 24 à une température plus basse que la température de vulcanisation du coeur de la bande de roulement 26.

L'installation 10 comprend encore un circuit 30 d'alimentation en liquide caloporteur des moyens de canalisation 28 comprenant une première branche principale 32 d'alimentation en liquide caloporteur à basse température, dite « branche d'admission » et une deuxième branche principale 34 d'évacuation du liquide caloporteur après circulation dans les moyens de canalisation 28, dite « branche de refoulement ».

Dans la suite de la description, on décrira plus en détail le demi-moule « supérieur » 16 représenté sur les figures 2 à 9. Bien entendu, la description détaillée du demi-moule 16 s'applique également au demi-moule « inférieur » 18 représenté sur la figure 1.

Les moyens de canalisation 28 du demi-moule 16 comprennent plus particulièrement une paroi annulaire 36 autour de l'axe X séparant au moins deux chambres 38 et 40 de circulation de liquide caloporteur (figure 2). Dans l'exemple décrit, la paroi annulaire 36 s'étend sensiblement parallèlement à l'axe de révolution X et la section des chambres 38 et 40 est de forme générale rectangulaire (figure 3).

Dans un premier mode de réalisation de l'invention, le demi-moule 16 comprend encore des moyens 52 de mise en circulation du liquide caloporteur dans des sens identiques dans les deux chambres 38, 40, d'une part, entre les extrémités amont 38A et aval 38B de la chambre 38 et, d'autre part, entre les extrémités amont 40A et aval 40B de la chambre 40. Les moyens de mise en circulation 52 sont destinés à raccorder des extrémités amont et aval de chacune des chambres au circuit d'alimentation en liquide caloporteur de manière à permettre une circulation du liquide à l'intérieur des chambres dans des sens identiques. Plus particulièrement, des orifices d'entrée 48A, 50A et de sortie 54B, 56B sont respectivement ménagés dans les extrémités amont 38A, 40A et aval 38B, 40B.

Les moyens de mise en circulation 52 comprennent pour chaque chambre 38, 40. des moyens de raccordement amont 58A de la branche d'admission 32 du liquide à l'orifice d'entrée 48A, 50A de chaque chambre 38, 40 et des moyens de raccordement aval 60B de la branche de refoulement 34 du liquide à l'orifice de sortie 54B, 56B de chaque chambre 38, 40.

Par ailleurs, comme cela est illustré sur la figure 2, l'extrémité amont 38A de l'une des chambres 38 est disposée sensiblement diamétralement opposée à l'extrémité amont 40A de l'autre des chambres 40. Il en va de même des extrémités aval 38B, 40B des deux chambres 38, 40. Cet agencement permet de créer une symétrie dans la circulation des liquides dans les chambres du demi-moule (symétrie centrale autour de l'axe X) et ainsi d'optimiser l'homogénéisation spatiale de la température.

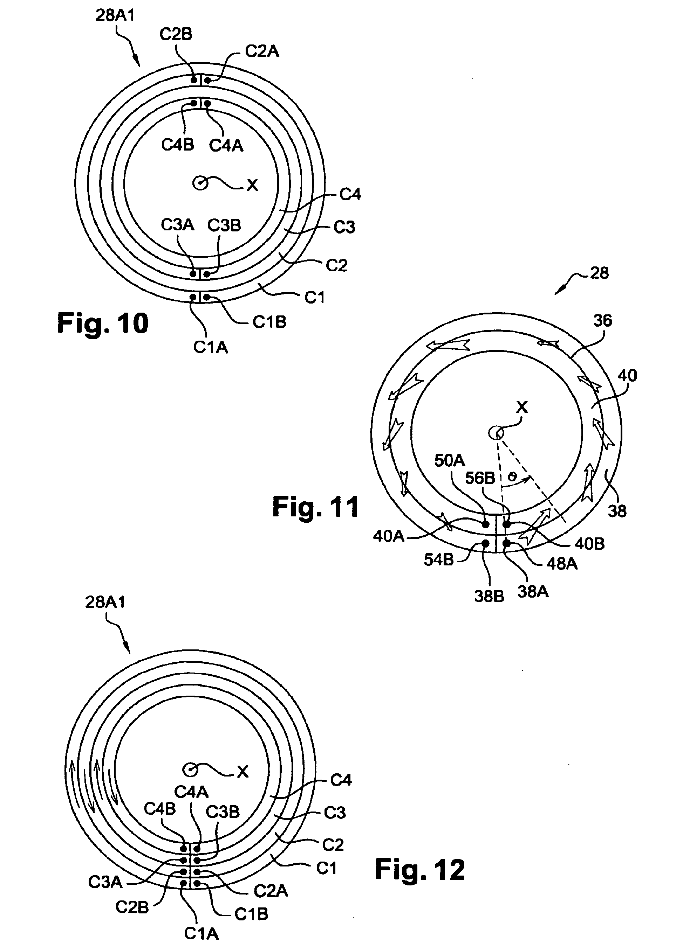

Dans un second mode de réalisation de l'invention illustré sur la figure 11, le demi-moule comprend des moyens de mise en circulation du liquide caloporteur dans des sens opposés. Sur cette figure 11, les éléments analogues à ceux de la figure 2 sont désignés par des références identiques. Dans ce cas, l'extrémité amont de l'une des chambres a sensiblement la même position angulaire par rapport au trajet des moyens de canalisation sensiblement circulaire autour de l'axe X que l'extrémité amont de l'autre des chambres. Il en va de même des extrémités aval des deux chambres.

Par ailleurs, de préférence, afin d'optimiser l'homogénéisation de la température dans la zone en contact avec les moyens de canalisation, la paroi 36 couple thermiquement les deux chambres 38 et 40 entre elles. L'expression « couplage thermique » signifie que la paroi 36 comprend au moins des zones ayant une résistance thermique relativement faible ce qui autorise des transferts de calories entre les deux chambres 38 et 40.

Afin de réaliser le couplage thermique des deux chambres 38 et 40, la paroi 36 comprend de préférence des moyens 42 de passage du liquide d'une chambre 38, 40 à l'autre 40, 38. Dans l'exemple illustré sur la figure 3, les moyens de passage 42 comprennent un bord 44 de débordement de hauteur H du liquide alternativement dans une chambre 38, 40 puis dans l'autre 40, 38. Eventuellement, la paroi annulaire 36 est réalisée dans un matériau thermiquement conducteur.

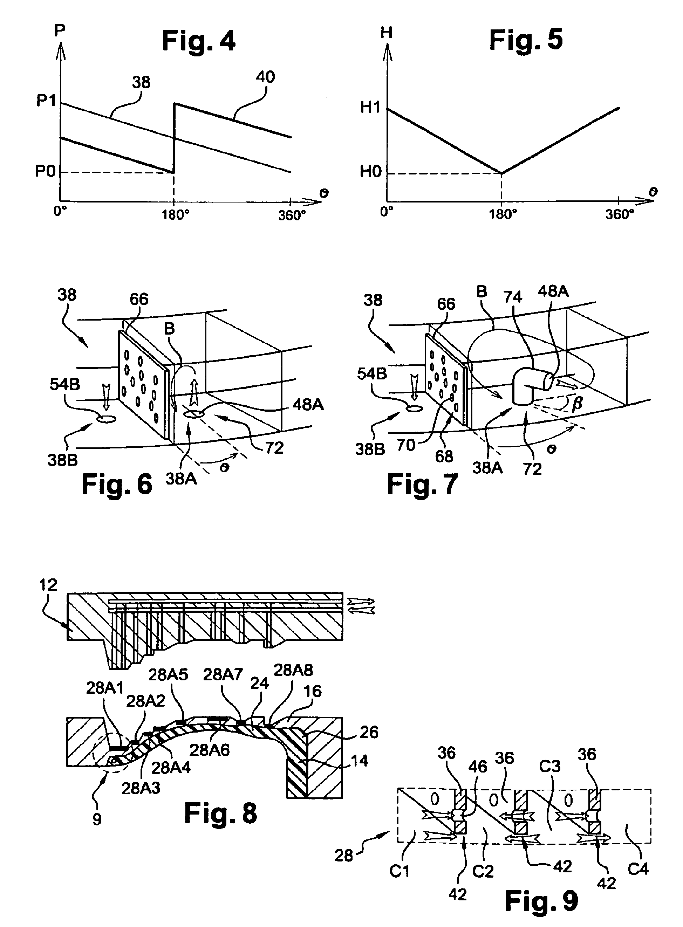

Le bord de débordement 44 a une hauteur H qui varie en fonction d'un angle polaire θ (voir figure.5) défini dans le système ayant pour pôle l'axe X et pour axe polaire d'origine (θ = 0°) la demi-droite passant par l'axe X et le centre d'un orifice d'entrée 48A de la chambre 38 ménagé dans une extrémité amont 38A de la chambre 38. La hauteur H du bord 44 varie de manière à ce que θ variant de 0° jusqu'à 180°, le liquide déborde de la chambre 38 vers la chambre 40 et que pour θ variant de 180° à 360°, le liquide déborde de la chambre 40 vers la chambre 38 comme cela est illustré sur la figure 2 par des flèches F dont les dimensions augmentent proportionnellement au flux de liquide passant d'une chambre à l'autre.

La variation de la hauteur H tient compte de la chute de pression du liquide circulant dans les chambres. En effet, comme cela est représenté sur le graphique de la figure 4 (courbe en trait continu), la pression du liquide dans la chambre 38 diminue de façon sensiblement linéaire au cours du trajet dans la chambre 38, d'une valeur maximale P1 à l'extrémité amont (θ = 0°) à une valeur minimale P0 à l'extrémité aval (θ légèrement inférieur à 360°). L'évolution de la pression du liquide circulant dans l'autre chambre 40 est sensiblement identique à celle de la chambre 38 (courbe en trait discontinu de la figure 4). Ainsi, la courbe en trait discontinu est décalée de la courbe en trait continu de 180° en abscisses.

La variation de la hauteur H de la paroi suit l'évolution de la courbe représentée sur la figure 5. Dans une première moitié du demi-moule 16, c'est-à-dire pour une valeur de θ variant de 0° à 180°, la valeur de la hauteur H de la paroi diminue d'une valeur maximale H1 pour θ = 0° pour atteindre une valeur minimale H0 pour θ = 180°. Dans cette première moitié, la hauteur de la paroi 36 diminue de H1 à H0 ce qui permet le débordement du liquide de la chambre 38 vers l'autre chambre 40 même après une chute de pression du liquide.

Dans la deuxième moitié du demi-moule 16, c'est-à-dire pour une valeur de θ variant de 180° à 360°, la hauteur de la paroi 36 varie également de H1 à H0 de manière à assurer le débordement du liquide de la chambre 40 vers l'autre chambre 38.

En variante, la hauteur du bord de débordement 44 peut être constante dans le demi-moule 16. Dans ce cas, afin de faire circuler le liquide d'une chambre vers l'autre, l'aire de la section de chacune des chambres évolue angulairement autour de l'axe (X) de façon opposée l'une de l'autre, par exemple de façon à diminuer dans le sens allant de l'extrémité amont vers l'extrémité aval de chaque chambre. Ceci permet de compenser la chute de pression du liquide au cours de son trajet dans la chambre. En effet, plus l'aire de la section de la chambre est faible plus la pression du liquide dans la chambre est élevée. Ainsi, sur la figure 3, on voit que l'aire de la section de la chambre 40 est inférieure à l'aire de la section de la chambre 38 de sorte que la pression du liquide dans la chambre 40 est supérieure à la pression du liquide dans la chambre 38 et permet ainsi de créer un flux de liquide F allant de la chambre 40 vers la chambre 38.

En outre, afin d'homogénéiser la température également de façon temporelle, l'installation 10 comprend encore des moyens 62 d'inversion du sens de circulation du liquide à une fréquence prédéterminée. Ces moyens d'inversion 62 comprennent par exemple un distributeur hydraulique bistable 64 de type 4/2 (figure 1).

Dans la suite de la description, on décrira en détail la chambre 38 représentée sur les figures 6 et 7. Bien entendu, la description détaillée de la chambre 38 s'applique également à la chambre 40.

La chambre 38 comprend une paroi 66 de séparation de ses deux extrémités amont 38A et aval 38B. Cette séparation permet d'éviter au mieux les turbulences indésirables susceptibles de se former entre les extrémités amont 38A et aval 38B de la chambre 38, notamment entre les orifices d'entrée 48A et de sortie 50A de la chambre 38.

Comme cela est représenté de façon détaillée sur les figures 6 et 7 pour la chambre 38, la paroi de séparation 66 comprend de préférence des moyens 68 de passage du liquide entre les deux extrémités 38A, 38B de la chambre 38. Ces moyens de passage 68 permettent de réduire les écarts de température entre les deux extrémités amont 38A et aval 38B de la chambre 38. Les moyens de passage 68 comprennent par exemple des orifices 70 de communication du liquide entre les deux extrémités 38A, 38B. En variante, la paroi de séparation 66 des deux extrémités 38A, 38B peut être réalisée dans un matériau poreux perméable au liquide circulant dans la chambre 38.

En outre, dans l'exemple illustré sur les figures 6 et 7, les dimensions de la paroi 66 sont déterminées de manière à laisser un espace entre deux bords de la paroi 66 et une paroi intérieure de la chambre 38 permettant la circulation du liquide caloporteur entre les deux extrémités de la chambre 38 et ainsi de réduire les écarts de température entre les deux extrémités, tout en limitant au mieux les turbulences indésirables du liquide.

Dans l'exemple illustré sur la figure 6, l'orifice d'entrée 48A de la chambre 38 est délimité par des moyens 72 d'orientation du flux de liquide destinés à diriger une partie du flux suivant une boucle B s'étendant entre l'orifice d'entrée 48A et la paroi de séparation 66 des extrémités amont 38A et aval 38B de la chambre 38. Cette boucle B permet d'entraîner le liquide à basse température injecté par l'orifice d'entrée 48A vers la paroi 66 et éviter ainsi une stagnation de liquide entre la paroi 66 et l'orifice d'entrée 48A pouvant être à l'origine d'une zone de température hétérogène du moule 12. Par ailleurs, grâce aux moyens de passage 68 de la paroi de séparation 66, le liquide entraîné dans la boucle B peut également passer de l'autre côté de la paroi 66 et se mélanger au liquide relativement chaud pouvant stagner également entre l'orifice de sortie 38B et la paroi de séparation 66.

De préférence, dans une variante illustrée sur la figure 7, les moyens d'orientation 72 du flux de liquide sont destinés également à orienter le flux de liquide suivant une direction sensiblement orthogonale à l'axe X du moule 12. A cet effet, comme on peut le voir sur la figure 7, les moyens d'orientation 72 comprennent un manchon 74, coudé sensiblement à angle droit, muni d'une première extrémité raccordée aux moyens 36 de mise en circulation forcée et d'une seconde extrémité délimitant l'orifice d'entrée 48A du liquide dans la chambre 38.

Dans cet exemple, la direction d'injection du flux de liquide forme un angle polaire β avec une droite sensiblement tangente au trajet circulaire du liquide dans la chambre. La valeur de cet angle β détermine notamment le nombre et la dimension de la ou des boucles B.

On va maintenant décrire ci-dessous les principaux aspects du fonctionnement d'une installation de refroidissement selon l'invention.

Dans l'installation 10, on place une ébauche crue 14 dans le moule 12. Au cours de la vulcanisation, afin d'homogénéiser les températures de vulcanisation des flancs dont l'épaisseur est plus faible que l'épaisseur de la bande de roulement, on fait circuler du liquide de refroidissement à basse température dans les moyens de canalisation.

Par ailleurs, au cours de la vulcanisation, grâce aux moyens d'inversion 62 du sens de circulation du liquide dans les chambres, il est possible d'inverser le sens de circulation du liquide à une fréquence prédéterminée de manière à optimiser l'homogénéisation de la température également de façon temporelle.

On a représenté sur les figures 8 à 10 un troisième mode de réalisation d'une installation de régulation thermique d'un moule selon l'invention.

Sur ces figures, on a représenté un demi-moule 16 comprenant plusieurs moyens de canalisation 28 répartis le long d'un des flancs du pneumatique. Sur ces figures 8 à 10, les éléments analogues à ceux des figures précédentes sont désignés par des références identiques.

Ainsi, le demi-moule 16 comprend huit moyens de canalisation distincts 28A1 à 28A8. Dans cet exemple, chacun des moyens de canalisation 28A1 à 28A8 comprennent au moins deux chambres C1, C2. Par exemple, on voit sur les figures 9 et 10, que les moyens de canalisation 28A1 comprennent quatre chambres C1 à C4 dans lesquelles circule le liquide caloporteur, les sens de circulation du liquide étant identiques d'une chambre adjacente à l'autre. Par ailleurs, les extrémités amont C1A à C4A et aval C1B à C4B d'une chambre adjacente à l'autre sont diamétralement opposées (figure 10).

Dans un quatrième mode de réalisation illustré sur la figure 12, le moule peut comprendre des moyens de circulation du liquide dans les chambres dans des sens opposés de manière à ce que les sens de circulation du liquide soient opposés d'une chambre adjacente à l'autre. Sur cette figure 12, les éléments analogues à ceux de la figure 10 sont désignés par des références identiques. Dans ce cas, les extrémités amonts (respectivement aval) des chambres ont sensiblement la même position angulaire par rapport au trajet des moyens de canalisation sensiblement circulaire autour de l'axe X.

On notera que, comme cela est représenté sur la figure 9, les moyens 42 de passage du liquide entre les chambres C1 à C4 comprennent des orifices 46 de passage du liquide caloporteur d'une chambre C1 à C4 à l'autre C4 à C1. Ces orifices 46 sont ménagés dans chaque paroi annulaire 36 de couplage thermique de deux chambres C1 à C4.

Dans ce troisième mode de réalisation, les moyens de canalisation 28A1 à 28A8 sont disposés le long du flanc de sorte que le refroidissement de la zone du moule en contact avec le flanc au cours de la vulcanisation est optimal. Il est ainsi possible d'optimiser encore l'homogénéité des températures des zones du moule en contact avec le flanc 24 en augmentant encore le nombre de moyens de canalisation afin de suivre au plus près le profil curviligne du moule.

Grâce à l'invention, du fait que la fin de trajet de liquide dans l'une des chambres coïncide avec le début du trajet de liquide dans l'autre des chambres, les gradients de températures sont réduits dans les zones de contact avec les flancs du moule et les zones de températures hétérogènes, lors de la cuisson, sont réduites voire inexistantes. En effet, d'une part la zone du moule en contact avec les flancs du pneumatique, lors de la cuisson du pneumatique, peut échanger des calories avec un liquide caloporteur dont la température est sensiblement constant si l'on considère les deux chambres comme un système unique. D'autre part, grâce au couplage thermique des deux chambres favorisant les échanges thermiques entre les chambres, le gradient de température entre les liquides circulant dans les deux chambres est réduit.

## Revendications

1. Moule (12) pour la vulcanisation d'une ébauche crue de pneumatique, ce moule ayant une forme générale annulaire autour d'un axe de révolution (X) et comprenant des moyens (28 ; 28A1 à 28A8) de canalisation d'un liquide caloporteur suivant un trajet sensiblement circulaire autour de l'axe, **caractérisé en ce que** les moyens de canalisation (28 ; 28A1 à 28A8) comprennent une paroi annulaire (36) autour de l'axe (X), séparant aux moins deux chambres (38, 40 ; C1 à C4) de circulation de liquide caloporteur et **en ce qu**'une extrémité aval (38A; C1A à C4A), respectivement amont (38B ; C1B à C4B) d'une des chambres (38; C1 à C4) a sensiblement la même position angulaire par rapport au trajet sensiblement circulaire que l'extrémité aval, respectivement amont de l'autre des chambres (40 ; C1 à C4), le moule comprend de plus des moyens (52, 58A, 60B) de mise en circulation du liquide dans des sens opposés dans les deux chambres (38, 40 ; C1 à C4).

2. Moule (12) pour la vulcanisation d'une ébauche crue de pneumatique, ce moule ayant une forme générale annulaire autour d'un axe de révolution (X) et comprenant des moyens (28 ; 28A1 à 28A8) de canalisation d'un liquide caloporteur suivant un trajet sensiblement circulaire autour de l'axe, **caractérisé en ce que** les moyens de canalisation (28 ; 28A1 à 28A8) comprennent une paroi annulaire (36) autour de l'axe (X), séparant aux moins deux chambres (38, 40 ; C1 à C4) de circulation de liquide caloporteur et **en ce qu**'une extrémité aval (38A ; C1A à C4A), respectivement amont (38B ; C1B à C4B) d'une des chambres (38; C1 à C4) est disposée sensiblement diamétralement opposée à l'extrémité aval (40A; C1A à C4A), respectivement amont (40B; C1B à C4B) de l'autre des chambres (40 ; C1 à C4), le moule comprend de plus des moyens de mise en circulation du liquide dans des sens identiques dans les deux chambres (38, 40 ; C1 à C4).

3. Moule (12) selon la revendication 1 ou 2, dans lequel la paroi (36) couple thermiquement les deux chambres (38, 40 ; C1 à C4).

4. Moule (12) selon la revendication 3, dans lequel la paroi (36) est réalisée dans un matériau thermiquement conducteur.

5. Moule (12) selon l'une quelconque des revendications 1 à 4, dans lequel la paroi (36) comprend des moyens (42) de passage du liquide d'une chambre (38, 40 ; C1 à C4) à l'autre (40, 38 ; C4 à C1).

6. Moule (12) selon la revendication 5, dans lequel les moyens de passage (42) comprennent des orifices (46) de passage du liquide caloporteur d'une chambre (38, 40 ; C1 à C4) à l'autre (40, 38 ; C4 à C1).

7. Moule (12) selon la revendication 5 ou 6, dans lequel les moyens de passage (42) comprennent un bord (44) de débordement du liquide alternativement dans une chambre (38, 40 ; C1 à C4) puis dans l'autre (40, 38 ; C4 à C1).

8. Moule (12) selon la revendication 7, dans lequel l'aire des sections de chaque chambre (38, 40 ; C1 à C4) évolue angulairement autour de l'axe (X) de façon opposée l'une de l'autre, par exemple de façon à diminuer dans le sens allant d'une extrémité amont (38A, 40A; C1A à C4A) à une extrémité aval (38B, 40B ; C1B à C4B) de la chambre (38, 40 ; C1 à C4).

9. Moule (12) selon l'une quelconque des revendications 1 à 8, dans lequel la paroi (36) s'étend sensiblement parallèlement à l'axe.

10. Moule (12) selon l'une quelconque des revendications 1 à 9, dans lequel au moins une chambre (38, 40 ; C1 à C4) comprend une paroi (66) de séparation d'une extrémité amont (38A, 40A ; C1A à C4A) et d'une extrémité aval (38B, 40B ; C1B à C4B) de la chambre (38, 40 ; C1 à C4).

11. Moule (12) selon la revendication 10, dans lequel la paroi de séparation (66) comprend des moyens (68) de passage du liquide entre les deux extrémités (38A, 38B, 40A, 40B ; C1A à C4A, C1 B à C4B).

12. Moule (12) selon la revendication 10 ou 11, dans lequel la paroi de séparation (66) des deux extrémités (38A, 38B, 40A, 40B ; C1A à C4A, C1B à C4B) est réalisée dans un matériau poreux perméable au liquide circulant dans la chambre (38, 40 ; C1 à C4).

13. Moule (12) selon la revendication 10, dans lequel l'extrémité amont (38A, 40A ; C1A à C4A) étant munie d'au moins un orifice d'entrée (48A, 50A), l'orifice (48A, 50A) est délimité par des moyens (72, 74) d'orientation du flux de liquide destinés à diriger une partie du flux suivant une boucle (B) s'étendant entre l'orifice d'entrée (48A, 50A) et la paroi (66) de séparation des extrémités amont (38A, 40A ; C1A à C4A) et aval (38B, 40B ; C1B à C4B) de la chambre (38, 40 ; C1 à C4).

14. Installation (10) de régulation thermique d'un moule (12) selon l'une quelconque des revendications 1 à 13, **caractérisée en ce qu**'elle comprend des moyens (62, 64) d'inversion du sens de circulation du liquide dans les chambres (38, 40 ; C1 à C4) du moule (12) à une fréquence prédéterminée.

15. Procédé de régulation thermique d'un moule (12) selon l'une quelconque des revendications 1 à 13, **caractérisé en ce que** l'on inverse le sens de circulation du liquide dans chaque chambre (38, 40 ; C1 à C4) à une fréquence prédéterminée.

## Claims

1. Mould (12) for vulcanizing a green tyre having an overall shape that is annular about an axis of revolution (X) and includes means (28; 28A1 to 28A8) for channelling a heat-transfer liquid in a substantially circular path about the axis, **characterized in that** the channelling means (28; 28A1 to 28A8) include an annular wall (36) around the axis (X), separating at least two chambers (38, 40; C1 to C4) in which the heat-transfer liquid circulates, and **in that** a downstream end (38A; C1A to C4A), respectively an upstream end (38B; C1B to C4B) of one of the chambers (38; C1 to C4) has substantially the same angular position with respect to the substantially circular path as the downstream, respectively upstream end of the other of the chambers (40; C1 to C4), and the mould additionally includes means (52, 58A, 60B) for circulating the liquid in opposite directions in the two chambers (38, 40; C1 to C4).

2. Mould (12) for vulcanizing a green tyre having an overall shape that is annular about an axis of revolution (X) and includes means (28; 28A1 to 28A8) for channelling a heat-transfer liquid in a substantially circular path about the axis, **characterized in that** the channelling means (28; 28A1 to 28A8) include an annular wall (36) around the axis (X), separating at least two chambers (38, 40; C1 to C4) in which the heat-transfer liquid circulates, and **in that** a downstream end (38A; C1A to C4A), respectively an upstream end (38B; C1B to C4B) of one of the chambers (38; C1 to C4) is disposed substantially diametrically opposite the downstream end (40A; C1A to C4A), respectively the upstream end (40B; C1B to C4B) of the other of the chambers (40; C1 to C4), and the mould additionally includes means for circulating the liquid in the same direction in the two chambers (38, 40; C1 to C4).

3. Mould (12) according to Claim 1 or 2, wherein the wall (36) thermally couples the two chambers (38, 40; C1 to C4) .

4. Mould (12) according to Claim 3, wherein the wall (36) is produced in a thermally conductive material.

5. Mould (12) according to any of Claims 1 to 4, wherein the wall (36) includes means (42) for passing the liquid from one chamber (38, 40; C1 to C4) to the other (40, 38; C4 to C1).

6. Mould (12) according to Claim 5, wherein the passage means (42) include orifices (46) for the heat-transfer liquid to pass from one chamber (38, 40; C1 to C4) to the other (40, 38; C4 to C1).

7. Mould (12) according to Claim 5 or 6, wherein the passage means (42) include an edge (44) for the liquid to overflow alternately into one chamber (38, 40; C1 to C4) and then into the other (40, 38; C4 to C1).

8. Mould (12) according to Claim 7, wherein the area of the section of each chamber (38, 40; C1 to C4) evolves angularly about the axis (X) oppositely, for example decreases in the direction from an upstream end (38A, 40A; C1A to C4A) to a downstream end (38B, 40B; C1B to C4B) of the chamber (38, 40; C1 to C4).

9. Mould (12) according to any of Claims 1 to 8, wherein the wall (36) extends substantially parallel to the axis.

10. Mould (12) according to any of Claims 1 to 9, wherein at least one chamber (38, 40; C1 to C4) includes a wall (66) separating an upstream end (38A, 40A; C1A to C4A) and a downstream end (38B, 40B; C1B to C4B) of the chamber (38, 40; C1 to C4).

11. Mould (12) according to Claim 10, wherein the separating wall (66) includes means (68) for passing the liquid between the two ends (38A, 38B, 40A, 40B; C1A to C4A, C1B to C4B).

12. Mould (12) according to Claim 10 or 11, wherein the wall (66) separating the two ends (38A, 38B, 40A, 40B; C1A to C4A, C1B to C4B) is produced in a porous material permeable to the liquid circulating in the chamber (38, 40; C1 to C4).

13. Mould (12) according to Claim 10, wherein the upstream end (38A, 40A; C1A to C4A) being provided with at least one inlet orifice (48A, 50A), the orifice (48A, 50A) is delimited by means (72, 74) for orienting the flow of liquid adapted to direct part of the flow into a loop (B) extending between the inlet orifice (48A, 50A) and the wall (66) separating the upstream ends (38A, 40A; C1A to C4A) and downstream ends (38B, 40B; C1B to C4B) of the chamber (38, 40; C1 to C4).

14. Installation (10) for regulating the temperature of a mould (12) according to any of Claims 1 to 13, **characterized in that** it includes means (62, 64) for reversing the direction of circulation of the liquid in the chambers (38, 40; C1 to C4) of the mould (12) at a predetermined frequency.

15. Method of regulating the temperature of a mould (12) according to any of Claims 1 to 13, **characterized in that** the direction of circulation of the liquid in each chamber (38, 40; C1 to C4) is reversed at a predetermined frequency.

## Patentansprüche

1. Formwerkzeug (12) zur Vulkanisierung eines Luftreifen-Rohlings, wobei dieses Formwerkzeug eine allgemeine Ringform um eine Drehachse (X) hat und Einrichtungen (28; 28A1 bis 28A8) zur Kanalisierung einer Wärmeträgerflüssigkeit gemäß einer im Wesentlichen kreisförmigen Bahn um die Achse enthält, **dadurch gekennzeichnet, dass** die Kanalisierungseinrichtungen (28; 28A1 bis 28A8) eine ringförmige Wand (36) um die Achse (X) enthalten, die mindestens zwei Wärmeträgerflüssigkeit-Strömungskammern (38, 40; C1 bis C4) trennt, und dass ein hinteres (38A; C1A bis C4A) bzw. vorderes Ende (38B; C1B bis C4B) einer der Kammern (38; C1 bis C4) im Wesentlichen die gleiche Winkelstellung bezüglich der im Wesentlichen kreisförmigen Bahn hat wie das hintere bzw. vordere Ende der anderen der Kammern (40; C1 bis C4), das Formwerkzeug außerdem Einrichtungen (52, 58A, 60B) enthält, um die Flüssigkeit in den zwei Kammern (38, 40; C1 bis C4) in entgegengesetzten Richtungen strömen zu lassen.

2. Formwerkzeug (12) zur Vulkanisierung eines Luftreifen-Rohlings, wobei dieses Formwerkzeug eine allgemeine Ringform um eine Drehachse (X) hat und Einrichtungen (28; 28A1 bis 28A8) zur Kanalisierung einer Wärmeträgerflüssigkeit gemäß einer im Wesentlichen kreisförmigen Bahn um die Achse enthält, **dadurch gekennzeichnet, dass** die Kanalisierungseinrichtungen (28; 28A1 bis 28A8) eine ringförmige Wand (36) um die Achse (X) enthalten, die mindestens zwei Wärmeträgerflüssigkeit-Strömungskammern (38, 40; C1 bis C4) trennt, und dass ein hinteres (38A; C1A bis C4A) bzw. vorderes Ende (38B; C1B bis C4B) einer der Kammern (38; C1 bis C4) im Wesentlichen diametral entgegengesetzt zum hinteren (40A; C1A bis C4A) bzw. vorderen Ende (40B; C1B bis C4B) der anderen der Kammern (40; C1 bis C4) angeordnet ist, wobei das Formwerkzeug außerdem Einrichtungen enthält, um die Flüssigkeit in den zwei Kammern (38, 40; C1 bis C4) in gleichen Richtungen strömen zu lassen.

3. Formwerkzeug (12) nach Anspruch 1 oder 2, bei dem die Wand (36) die beiden Kammern (38, 40; C1 bis C4) thermisch verbindet.

4. Formwerkzeug (12) nach Anspruch 3, bei dem die Wand (36) aus einem wärmeleitenden Material hergestellt ist.

5. Formwerkzeug (12) nach einem der Ansprüche 1 bis 4, bei dem die Wand (36) Durchgangseinrichtungen (42) der Flüssigkeit von einer Kammer (38, 40; C1 bis C4) zur anderen (40, 38; C4 bis C1) enthält.

6. Formwerkzeug (12) nach Anspruch 5, bei dem die Durchgangseinrichtungen (42) Durchgangsöffnungen (46) der Wärmeträgerflüssigkeit von einer Kammer (38, 40; C1 bis C4) zur anderen (40, 38; C4 bis C1) enthalten.

7. Formwerkzeug (12) nach Anspruch 5 oder 6, bei dem die Durchgangseinrichtungen (42) einen Rand (44) für den Überlauf der Flüssigkeit alternativ in eine Kammer (38, 40; C1 bis C4) und dann in die andere (40, 38; C4 bis C1) enthalten.

8. Formwerkzeug (12) nach Anspruch 7, bei dem der Bereich der Querschnitte jeder Kammer (38, 40; C1 bis C4) sich winkelmäßig um die Achse (X) einander entgegengesetzt entwickelt, zum Beispiel, indem er in der von einem vorderen Ende (38A, 40A; C1A bis C4A) zu einem hinteren Ende (38B, 40B; C1B bis C4B) der Kammer (38, 40; C1 bis C4) verlaufenden Richtung abnimmt.

9. Formwerkzeug (12) nach einem der Ansprüche 1 bis 8, bei dem die Wand (36) sich im Wesentlichen parallel zur Achse erstreckt.

10. Formwerkzeug (12) nach einem der Ansprüche 1 bis 9, bei dem mindestens eine Kammer (38, 40; C1 bis C4) eine Wand (66) zur Trennung eines vorderen Endes (38A, 40A; C1A bis C4A) und eines hinteren Endes (38B, 40B; C1B bis C4B) der Kammer (38, 40; C1 bis C4) enthält.

11. Formwerkzeug (12) nach Anspruch 10, bei dem die Trennwand (66) Durchgangseinrichtungen (68) der Flüssigkeit zwischen den zwei Enden (38A, 38B, 40A, 40B; C1A bis C4A, C1B bis C4B) enthält.

12. Formwerkzeug (12) nach Anspruch 10 oder 11, bei dem die Trennwand (66) der zwei Enden (38A, 38B, 40A, 40B; C1A bis C4A, C1B bis C4B) aus einem porösen Material hergestellt wird, das für die in der Kammer strömende Flüssigkeit (38, 40; C1 bis C4) durchlässig ist.

13. Formwerkzeug (12) nach Anspruch 10, bei dem, wenn das vordere Ende (38A, 40A; C1A bis C4A) mit mindestens einer Eingangsöffnung (48A, 50A) versehen ist, die Öffnung (48A, 50A) von Einrichtungen (72, 74) zur Ausrichtung des Flüssigkeitsstroms begrenzt wird, die dazu bestimmt sind, einen Teil des Stroms gemäß einer Schleife (B) zu lenken, die sich zwischen der Eingangsöffnung (48A, 50A) und der Trennwand (66) des vorderen (38A, 40A; C1A bis C4A) und hinteren Endes (38B, 40B; C1B bis C4B) der Kammer (38, 40; C1 bis C4) erstreckt.

14. Anlage (10) zur Wärmeregelung eines Formwerkzeugs (12) nach einem der Ansprüche 1 bis 13, **dadurch gekennzeichnet, dass** sie Einrichtungen (62, 64) zur Umkehr der Strömungsrichtung der Flüssigkeit in den Kammern (38, 40; C1 bis C4) des Formwerkzeugs (12) mit vorbestimmter Häufigkeit enthält.

15. Verfahren zur Wärmeregelung eines Formwerkzeugs (12) nach einem der Ansprüche 1 bis 13, **dadurch gekennzeichnet, dass** die Strömungsrichtung der Flüssigkeit in jeder Kammer (38, 40; C1 bis C4) mit vorbestimmter Häufigkeit umgekehrt wird.
